# DEMANDE DE BREVET EUROPEEN

(11) **EP 4 388 932 A2**
(43) Date de publication de la demande: **26.06.2024**
(21) Numéro de dépôt: 23216379.0
(22) Date de dépôt: 13.12.2023
(51) Int. Cl.: A46B 3/22, A46B 9/00, A46B 9/02, A46D 1/00, A46B 1/00

(54) **APPLICATEUR DE PRODUIT COSMETIQUE**

(30) Priorité: 19.12.2022 FR 2213878; 06.02.2023 FR 2301115
(71) Demandeur: TEXEN, 01460 Brion (FR)
(72) Inventeur: KOUICEM, Mohamed Mounder, 01000 BOURG-EN-BRESSE (FR); PACCAUD, Denis, 69008 LYON (FR)
(74) Mandataire: Germain Maureau

(57) **Abrégé**

L'invention concerne un applicateur d'un produit cosmétique sur la peau ou des poils, comprenant un organe d'application (12), en un matériau élastomère thermoplastique, l'organe d'application comprenant : une âme (13) s'étendant suivant un axe longitudinal (X), et des éléments d'application (14) formés à la surface (16) de l'organe d'application, chacun des éléments d'application présentant un sommet (15) ayant une largeur supérieure à 35 µm et inférieure à 450 µm.

## Description

### Domaine technique

La présente invention concerne le domaine des applicateurs de produits cosmétiques de maquillage et de produits de soin de la peau. La présente invention concerne plus particulièrement les applicateurs à texture floquée pour appliquer notamment du brillant ou de l'huile à lèvres ("lip gloss") et un produit anticernes ("concealer") et éventuellement du mascara. L'invention concerne également un procédé de fabrication d'un tel applicateur.

### Etat de la technique

Les applicateurs notamment de brillant à lèvres ou d'huile à lèvres présentent généralement un flocage formé de poils collés sur un support. Un tel flocage nécessite plusieurs étapes de fabrication pour assembler des pièces réalisées dans des matériaux différents. Il en résulte que l'applicateur est difficilement recyclable.

La demande de brevet US2019/0343262 décrit un applicateur cosmétique comportant un cadre en plastique dur et des poils en silicone agencés radialement et recouvrant la périphérie externe du cadre. En raison de la fragilité des poils, cet applicateur ne peut pas être fabriqué par moulage par injection traditionnel, mais par injection sous vide.

La demande de brevet US2008/0083421 décrit un applicateur de mascara susceptible d'être moulé en une seule pièce par injection comportant une tige, un moyeu formé à l'extrémité de la tige, et des membres pourvus de poils s'étendant radialement depuis le moyeu. Les membres sont prévus pour être maintenus repliés le long de la tige, les poils sur les membres s'étendant sensiblement radialement depuis l'axe de la tige.

La demande de brevet US2021/0323205 décrit un procédé de fabrication d'un applicateur cosmétique comprenant une étape de moulage par injection d'un matériau thermoplastique. Cette étape de moulage fait intervenir un moule dont la surface intérieure présente des cavités micro-gravées destinées à former un flocage.

La formation de flocage ou de poils par moulage entraine de nombreux défauts au moulage et au démoulage notamment en raison des formes très fines du flocage ou des poils.

La demande de brevet FR 3 091 983 décrit également un procédé de fabrication d'un applicateur de produit cosmétique comprenant des étapes de mélange de la matière thermoplastique à un gaz inerte et d'injection du mélange dans un moule, pour obtenir une structure superficielle microporeuse.

Il est donc souhaitable de proposer un applicateur de produit cosmétique ou de soin de la peau présentant une texture floquée qui soit efficace, tant pour supporter le produit, que pour le transférer à la peau ou aux cils ou sourcils. Il peut également être souhaitable que l'applicateur puisse être fabriqué facilement, par moulage par injection d'un matériau élastomère thermoplastique, et avec un taux de défauts de fabrication le plus faible possible.

### Résumé de l'invention

Des modes de réalisation concernent un applicateur d'un produit cosmétique sur la peau ou des poils, comprenant un organe d'application en un matériau élastomère thermoplastique, l'organe d'application comprenant : une âme s'étendant suivant un axe longitudinal, et des éléments d'application formés à la surface de l'organe d'application, chacun des éléments d'application présentant un sommet ayant une largeur supérieure à 35 µm et inférieure à 450 µm.

Un tel applicateur présente l'avantage de pouvoir être réalisé uniquement par moulage, tout en présentant une texture floquée, qui peut être facilement démoulée en raison des sommets élargis, sensiblement plats des éléments d'application.

Selon un mode de réalisation, le sommet des éléments d'application présente une longueur plus grande que leur largeur.

De cette manière, il est possible d'obtenir une surface présentant des propriétés à la fois plus et moins hydrophobes selon la direction considérée. Le caractère hydrophobe peut être adapté en fonction du produit cosmétique à appliquer, simplement en ajustant les dimensions des sommets et les distances entre les sommets des éléments d'application.

Selon un mode de réalisation, le sommet des éléments d'application présente une forme rectangulaire, ou les éléments d'application présentent la forme de nervures parallèles.

Cette disposition permet de combiner des caractères hydrophile et hydrophobe, aptes à, à la fois, retenir suffisamment le produit cosmétique, et facilement transférer ce dernier à la peau ou aux cils.

Selon un mode de réalisation, les éléments d'application présentent une largeur comprise entre 40 et 400 µm.

Ces dimensions s'avèrent particulièrement adaptées pour la fonction d'application d'un produit cosmétique.

Selon un mode de réalisation, les éléments d'application présentent une hauteur comprise entre 350 et 600 µm.

Une telle profondeur permet de retenir une quantité suffisante de produit cosmétique, sans perturber le caractère hydrophobe du relief formé par les éléments d'application. En outre, les éléments d'application peuvent se déformer durant l'application et libérer le produit accumulé entre eux.

Selon un mode de réalisation, les éléments d'application, sont espacés les uns des autres d'une distance comprise entre une et deux fois et demi la largeur du sommet des éléments d'application.

Une telle distance permet de retenir une quantité suffisante de produit cosmétique, tout en offrant le caractère hydrophobe requis.

Selon un mode de réalisation, l'âme présente une gorge de forme circulaire ou hélicoïdale.

Cette gorge permet de retenir une quantité supplémentaire de produit cosmétique.

Selon un mode de réalisation, l'âme comprend deux parties en forme de goutte disposées suivant l'axe longitudinal, les deux parties délimitant entre elles une gorge annulaire.

Cette forme présente une bonne ergonomie tout en permettant de retenir une quantité supplémentaire de produit cosmétique.

Selon un mode de réalisation, l'organe d'application comprend une pluralité de pièces engagées sur une tige de l'applicateur, les éléments d'application étant formés sur tout ou partie de la surface des pièces.

Selon un mode de réalisation, chacune des pièces comprend deux parties en forme d'ailette liées entre elles par une partie formant un moyeu dans lequel la tige de l'applicateur est engagée, les parties de forme d'ailette formant des ailettes autour de la tige de l'applicateur.

Selon un mode de réalisation, chacune des pièces présente la forme d'une étoile avec un moyeu dans lequel la tige de l'applicateur est engagée et des éléments radiaux s'étendant radialement autour du moyeu.

Des modes de réalisation peuvent également concerner un procédé de fabrication d'un applicateur cosmétique tel que précédemment défini, le procédé comprenant une étape de moulage d'un matériau élastomère thermoplastique, à l'aide d'un moule de forme complémentaire à celle de l'applicateur, présentant une pluralité de cavités de formes complémentaires à celles des éléments d'application de l'applicateur.

La forme particulière de l'applicateur avec des éléments d'application présentant un sommet ayant une relativement grande largeur, lui permet d'être fabriqué en une unique étape de moulage, avec un faible risque de cassure des éléments d'application lors du démoulage. Il en résulte un nombre de défauts de fabrication réduit et une simplification de l'opération de nettoyage du moule qui peut être nécessaire d'effectuer entre deux opérations de moulage.

Selon un mode de réalisation, le procédé comprend une étape de fabrication du moule, les cavités étant formées à l'aide d'un laser femto-seconde.

Les propriétés des surfaces formées par un tel laser permettent à la fois d'obtenir un démoulage aisé avec un faible risque de cassure et de mouler des surfaces présentant une bonne affinité avec les produits cosmétiques à appliquer.

Des modes de réalisation peuvent également concerner un moule pour la fabrication d'un applicateur de produit cosmétique tel que précédemment défini, le moule comprenant une surface de moulage présentant une pluralité de cavités de formes complémentaires à celles des éléments d'application de l'applicateur.

### Brève description des figures

La présente invention sera bien comprise à l'aide de la description qui suit d'exemples de réalisation en référence aux figures annexées, dans lesquelles des signes de références identiques correspondent à des éléments structurellement et/ou fonctionnellement identiques ou similaires.
La figure 1 est une vue schématique en coupe longitudinale d'un applicateur cosmétique, selon un mode de réalisation,
La figure 2 est une vue schématique en coupe transversale, d'un relief formé à la surface de l'applicateur cosmétique, selon un mode de réalisation,
La figure 3 est une vue schématique de face du relief formé à la surface de l'applicateur cosmétique, selon un mode de réalisation,
La figure 4 est une vue schématique en coupe longitudinale d'un moule pour la fabrication d'un applicateur cosmétique, selon un mode de réalisation,
La figure 5 est une vue schématique de face du relief formé à la surface de l'applicateur cosmétique, selon un autre mode de réalisation,
La figure 6 est une vue schématique de face du relief formé à la surface de l'applicateur cosmétique, selon un autre mode de réalisation,
La figure 7 est une vue schématique en coupe d'une goutte d'eau déposée à la surface de l'applicateur,
La figure 8 est une vue schématique en coupe longitudinale d'un applicateur cosmétique, selon un autre mode de réalisation,
La figure 9 est une vue schématique en coupe longitudinale d'un applicateur cosmétique, selon un autre mode de réalisation,
La figure 10 est une vue schématique en perspective d'un autre applicateur cosmétique, selon un autre mode de réalisation,
La figure 11 représente des vues schématiques en perspective de pièces formant l'applicateur cosmétique de la figure 10,
La figure 12 est une vue schématique en perspective d'une pièce d'un applicateur cosmétique, selon un autre mode de réalisation,
La figure 13 est une vue schématique en perspective d'un applicateur cosmétique formé avec la pièce de la figure 12, selon un mode de réalisation,
La figure 14 est une vue schématique en perspective d'un autre applicateur cosmétique, selon un autre mode de réalisation,
La figure 15 est une vue schématique de face d'une pièce formant l'applicateur cosmétique de la figure 14.

### Description détaillée

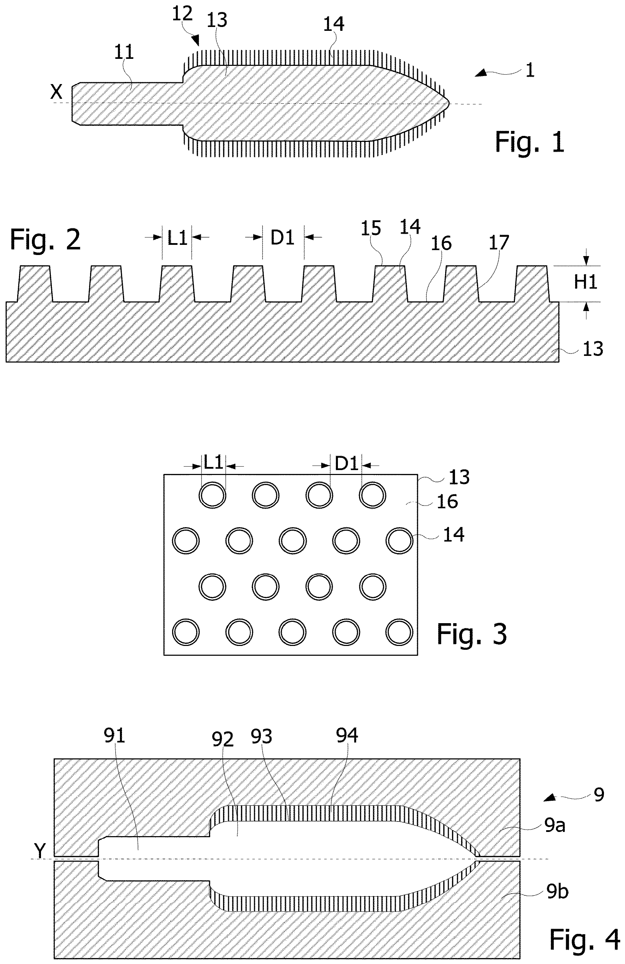

La figure 1 représente un applicateur cosmétique 1 comprenant une tige 11 d'axe longitudinal X, solidaire d'un organe d'application 12 comprenant une âme 13 portant une pluralité d'éléments d'application 14 répartis sur au moins une partie de la surface de l'âme 13.

Dans l'exemple de la figure 1, l'âme 13 présente une forme allongée selon son axe longitudinal X, et une extrémité distale sensiblement conique.

Selon un mode de réalisation illustré par les figures 2 et 3, chaque élément d'application 14 d'au moins une partie des éléments d'application 14 présente un sommet 15 de largeur L1, pouvant s'étendre dans une surface parallèle à une partie de la surface 16 de l'âme 13 où est localisé l'élément d'application. Les éléments d'application 14 s'étendent sur une hauteur H1 au-dessus de la surface 16 de la partie de l'âme 13 où ils sont situés. Les sommets 15 des éléments d'application 14 de la partie des éléments d'application 14 sont espacés les uns des autres d'une distance D1. Les sommets des éléments d'application 14 sont sensiblement plats à 10% de la hauteur H1 près.

La forme des éléments d'application 14 avec un large sommet, présente les avantages d'être facile à démouler, notamment en réduisant les risques de cassure des extrémités des éléments d'application dans les reliefs du moule.

Selon un mode de réalisation, la distance D1 entre les éléments d'application 14 est comprise entre une et trois fois la largeur L1. Selon un exemple de réalisation, la largeur L1 des éléments d'application 14 est comprise entre 80 et 160 µm, et de préférence comprise entre 90 et 150 µm. La distance D1 entre les éléments d'application 14 est comprise entre 80 et 160 µm, et de préférence comprise entre 90 et 150 µm. La hauteur maximum H1 des éléments d'application 14 est comprise entre 350 et 600 µm. En direction des extrémités de l'âme 13 suivant l'axe longitudinal X, les éléments d'application 14 peuvent présenter une hauteur H1 décroissante, comme cela apparaît sur la figure 1.

Dans l'exemple de la figure 3, les éléments d'application 14 présentent un sommet de forme circulaire de diamètre L1.

Selon un mode de réalisation, l'applicateur 1 est fabriqué en une seule pièce à l'aide d'un moule, par injection d'un matériau élastomère thermoplastique (TPE). La figure 4 représente un exemple d'un tel moule 9. Dans l'exemple de la figure 4, le moule 9 est par exemple formé de deux demi-moules 9a, 9b délimitant entre eux un volume correspondant à celui de l'applicateur 1. Ce volume comprend une partie 91 permettant de mouler la tige 11 et une partie 92 permettant de mouler l'âme 13 de l'applicateur 1 et les éléments d'application 14. Pour mouler les éléments d'application 14, les demi-moules 9a, 9b présentent une pluralité de cavités 94 formées dans les parois 93 délimitant l'âme 13. Les surfaces de moulage des demi-moules 9a, 9b peuvent être de formes identiques.

Selon un mode de réalisation, les cavités 54 sont réalisées dans le matériau formant les demi-moules 9a, 9b à l'aide d'un laser femto-seconde. Un tel laser permet de réaliser un relief dans une surface de moule avec une précision suffisante pour former les éléments d'application 14, les faces latérales 17 des éléments d'application 14 étant sensiblement perpendiculaires (à 15° près) à la surface 16 de l'âme 13. Cette technique de formation des cavités 94 présente également l'avantage de former un relief et des surfaces ayant une bonne affinité avec les produits cosmétiques à appliquer.

Il convient d'observer que la forme élargie et plane ou sensiblement plane des sommets 15 des éléments d'application 14 réduit le risque de cassure lors du démoulage, par rapport à des éléments d'application pointus. L'opération de nettoyage du moule entre deux opérations de moulage se trouve donc simplifiée.

Il convient également d'observer que les cavités 94 sont orientées perpendiculairement au plan d'interface entre les deux demi-moules et donc peuvent être facilement réalisées en orientant le laser perpendiculairement à ce plan.

L'applicateur 1 peut être réalisé en un élastomère thermoplastique TPE tel que le SEBS (polystyrène-b-poly(éthylène-butylène)-b-polystyrène) et/ou dans un matériau thermoplastique ayant une dureté d'environ 30 shore A (à + ou - 10% près). Le SEBS présente l'avantage d'être agréable au toucher et donc approprié pour un contact avec la peau.

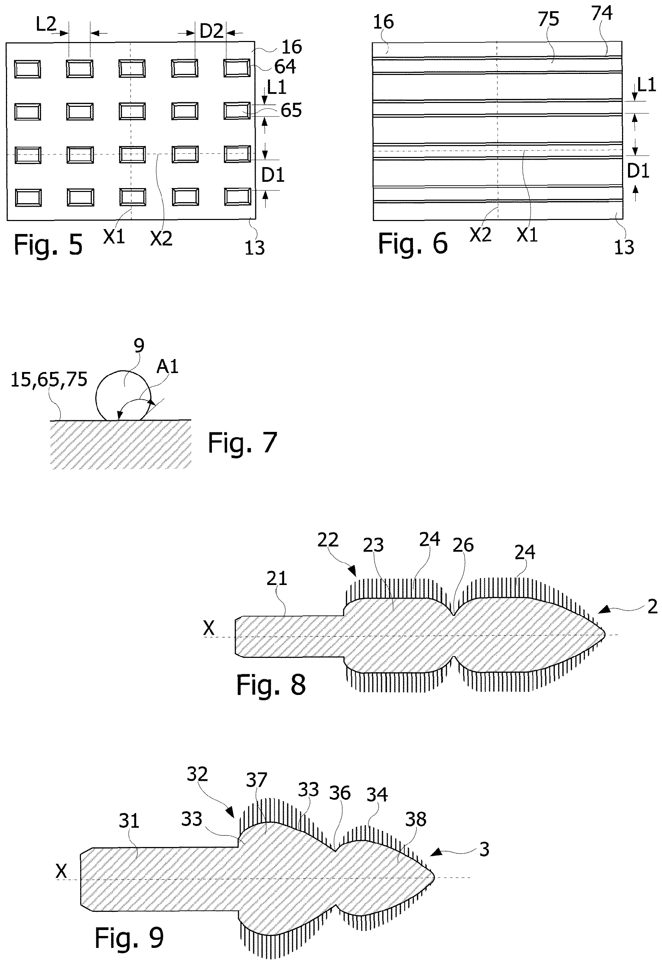

La figure 5 représente un relief formé par des éléments d'application 64 réalisés sur la surface de l'âme 13, selon un autre mode de réalisation. Chacun des éléments d'application 64 présente un sommet 65 de forme rectangulaire de largeur L1 et de longueur L2. Les sommets 15 des éléments d'application 64 sont espacés les uns des autres dans la direction X1 de la largeur L1 d'une distance D1 et dans une direction X2 de la longueur L2 d'une distance D2. Les éléments d'application 64 peuvent également présenter la hauteur H1 au-dessus de la surface 16 de l'âme 13. Selon des exemples de réalisation, les largeur L1 et longueur L2 sont respectivement comprises entre 150 et 250 µm et entre 350 et 450 µm, et de préférence respectivement égales à 200 et 400 µm (à + ou - 10% près). Les distances D1 et D2 sont comprises entre 350 et 450 µm, et de préférence égales à 400 µm (à + ou - 10% près).

La figure 6 représente un relief formé par des éléments d'application 74 réalisé sur la surface de l'âme 13, selon un autre mode de réalisation. Chacun des éléments d'application 74 présente un sommet 75 en forme de nervure de largeur L1. Les sommets 75 des éléments d'application 74 s'étendent parallèlement les uns aux autres et sont espacés les uns des autres d'une distance D1. Les éléments d'application 74 peuvent également présenter la hauteur H1 au-dessus de la surface 16 de l'âme 13. Les éléments d'application 74 en forme de nervure peuvent présenter une forme annulaire ou hélicoïdale autour de l'âme 13 (autour de l'axe longitudinal X). Selon des exemples de réalisation, la largeur L1 est comprise entre 40 et 400 µm, et de préférence comprise entre 200 et 400 µm. La distance D1 entre les sommets des nervures est comprise entre 350 et 450 µm, et de préférence égale à 400 µm (à + ou - 10% près).

Toute autre forme de sommet des éléments d'application 14 peut également convenir comme une forme elliptique, ou une forme polygonale inscrite dans un cercle ou dans une ellipse.

La figure 7 représente une goutte d'eau 9 déposée sur la surface des sommets 15, 65, 75 des éléments d'application 14, 64, 74. La figure 7 montre également un angle A1 entre la surface 15, 65, 75 et une droite tangente à la goutte 9 en un point d'intersection entre la goutte et la surface 15, 65, 75. On comprend ici que plus l'angle A1 est petit, plus la goutte 9 pénètre dans le relief et donc plus le relief présente un caractère hydrophile. Inversement, aux angles supérieurs à 90°, il est généralement considéré la surface présente un caractère hydrophobe.

Le tableau 1 ci-dessous rassemble des exemples de dimensions de sommets et de distances entre les sommets et les angles A1 mesurés dans les directions perpendiculaires X1 et X2, indiquées sur les figures 5 et 6, la direction X1 étant parallèle à la longueur des rectangles 65 ou des nervures 75.

**Tableau 1**

| Forme des sommets | Dim. (µm) | D1 (µm) | A1 // X1 (°) | A1 // X2 (°) |
|---|---|---|---|---|
| Cercles (L1) | 90 | 90 | 129 | 129 |
| Cercles (L1) | 150 | 150 | 126 | 126 |
| Rectangles (L1xL2) | 400 x 200 | 400 | 114 | 129 |
| Nervures (L1) | 40 | 80 | 112 | 127 |
| Nervures (L1) | 90 | 200 | 92 | 125 |
| Nervures (L1) | 400 | 400 | 93 | 139 |

Dans le cas des sommets 65 de forme rectangulaire (figure 5), la distance D2 est choisie égale à la distance D1.

Il ressort du tableau 1 que les nervures (figure 6) et les formes rectangulaires (figure 5) présentent un caractère hydrophobe (angle A1 supérieur à 90°) plus prononcé suivant la direction X1 que suivant la direction X2. Il s'avère également que les surfaces hydrophobes sont souvent lipophiles et réciproquement, les surfaces hydrophiles sont souvent lipophobes. Dans le cadre des applicateurs de produits cosmétiques qui sont généralement des corps gras, cet aspect peut avantageusement être exploité pour obtenir à la fois bonne une retenue du produit cosmétique sur l'applicateur et une bonne disponibilité du produit pour pouvoir être facilement transféré et étalé de l'applicateur sur la peau ou sur les cils ou les sourcils.

Les figures 8 et 9 représentent des d'applicateurs 2, 3, réalisés en une seule pièce par une unique opération de moulage, selon d'autres modes de réalisation. Sur la figure 8, l'applicateur 2 comprend une tige 21 d'axe longitudinal X. La tige 21 est solidaire d'un organe d'application 22 comprenant une âme 23 portant une pluralité d'éléments d'application 24 répartis sur au moins une partie de la surface de l'âme 23. L'âme 23 présente une forme allongée selon son axe longitudinal X, et une extrémité distale sensiblement conique. L'âme 23 comprend en outre une gorge 26 s'étendant autour de l'axe X. La gorge 26 assure la fonction de réservoir pour retenir davantage de produit cosmétique. La gorge 26 peut présenter une forme circulaire (figure 8) ou hélicoïdale.

Sur la figure 9, l'applicateur 3 comprend une tige 31 d'axe longitudinal X. La tige 31 est solidaire d'un organe d'application 32 comprenant une âme 33 portant une pluralité d'éléments d'application 34 répartis sur au moins une partie de la surface de l'âme 33. L'âme 33 présente une forme combinant deux parties 37, 38 en forme de gouttes d'eau, dont les axes longitudinaux de révolution coïncident avec l'axe X. Les formes en gouttes d'eau 37, 38 délimitant entre elles une gorge annulaire 36 pouvant également assurer la fonction de réservoir de produit cosmétique. La forme en goutte d'eau 38 côté distal de l'âme 33 peut être plus petite que la forme en goutte d'eau 37 côté proximal de l'âme.

Il apparaîtra clairement à l'homme de l'art que la présente invention est susceptible de diverses variantes de réalisation et diverses applications. En particulier, l'invention n'est pas limitée aux formes d'applicateurs précédemment décrites. D'autres formes d'applicateur peuvent convenir dès lors que l'applicateur présente un relief avec des éléments d'application présentant des sommets élargis, sensiblement plats, susceptible de retenir un produit cosmétique et de le transférer sur la peau ou sur des poils (cils, sourcils).

L'invention n'est pas non plus limitée à un organe d'application formé d'une seule pièce. En effet, il peut être envisagé de fabriquer l'organe d'application en assemblant plusieurs pièces, par exemple par emboitement. Ces pièces peuvent comporter au moins une surface sur laquelle sont formés des éléments d'application. Comme précédemment, les éléments d'application peuvent présenter un sommet ayant une largeur supérieure à 35 µm et inférieure à 450 µm. Chacune de ces pièces peut être formée à l'aide d'un moule de forme complémentaire et présentant une surface comportant des cavités pouvant être réalisées à l'aide d'un laser femto-seconde, pour former les éléments d'application. Les différentes pièces formant l'âme de l'organe d'application peuvent être identiques ou non.

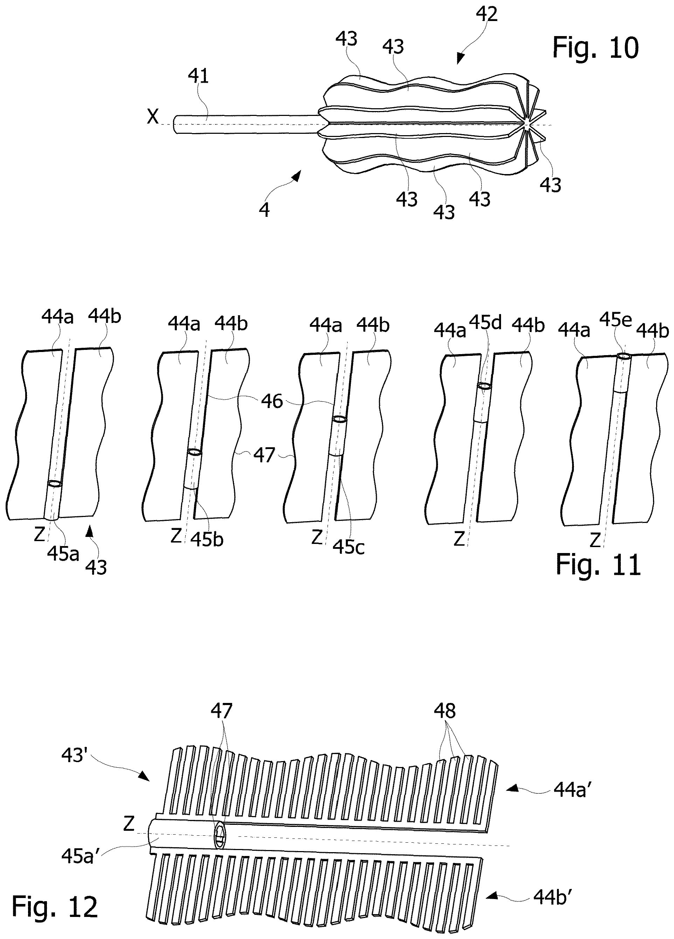

Selon un exemple de réalisation illustré par les figures 10 et 11, les pièces assemblées formant l'âme de l'applicateur 4 comprennent des pièces 43 formées de deux parties 44a, 44b de forme sensiblement rectangulaire liées entre elles par une partie 45a-45e formant un moyeu dont l'axe Z est parallèle à un bord intérieur 46 de chaque partie rectangulaire. Les pièces sont assemblées pour former l'applicateur à l'aide de la tige 41 de l'applicateur, engagée dans le moyeu 45a-45e de chacune des pièces 43, de manière à former des ailettes 44a, 44b de forme rectangulaire réparties autour de la tige 41, en une même position le long de l'axe longitudinal X de la tige 41 qui coïncide avec l'axe Z des moyeux 45a-45e. A cet effet, le moyeu respectif 45a-45e de chacune des pièces 43 est disposé par rapport aux ailettes 44a, 44b en des emplacements distincts le long de l'axe Z espacés de la longueur des moyeux. Dans l'exemple des figures 10 et 11, l'applicateur 4 comprend cinq pièces 43 comportant chacune deux ailettes 44a, 44b.

Selon un exemple de réalisation illustré par les figures 10 et 11, les bords extérieurs 47 des ailettes 44a, 44b peuvent présenter des ondulations, notamment afin de faciliter l'application du produit cosmétique.

Selon un mode de réalisation, les éléments d'application 14, 64, 74 sont formés sur tout ou partie des faces des pièces 43. A cet effet, les faces correspondantes des moules permettant de fabriquer les pièces 43 peuvent être traitées à l'aide d'un laser femto-seconde pour former les cavités 94 aux emplacements souhaités. Si nécessaire, un système de miroirs peut être utilisé pour orienter le faisceau laser sur certaines faces du moule, par exemple sur les faces formant l'épaisseur des ailettes 44a, 44b. A noter que toutes les pièces 43 peuvent être fabriquées en une seule étape de moulage à l'aide d'un même moule comprenant une cavité de moulage par pièce.

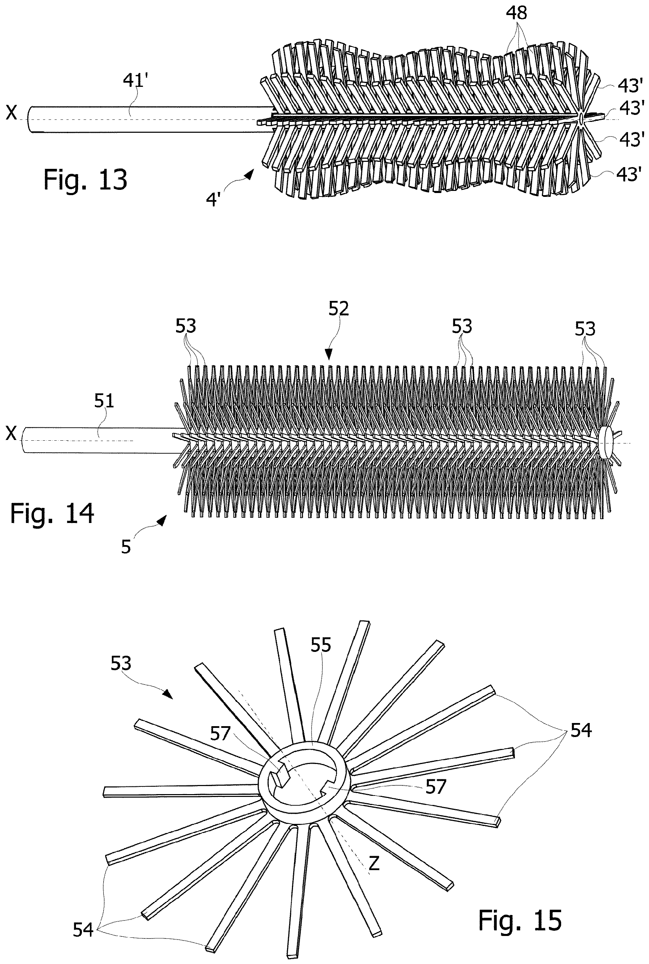

Selon un autre exemple de réalisation illustré par les figures 12 et 13, les aillettes 44a, 44b sont découpées en forme de peignes. Ainsi dans l'exemple des figures 12 et 13, l'applicateur 4' comprend des pièces 43' formant des aillettes 44a',44b' dont les bords externes ondulés sont découpés de manière à former des dents 48, l'ensemble des dents 48 de chaque aillette 44a', 44b' formant un peigne. L'applicateur 4' peut ainsi être adapté pour que les dents 48 puissent passer entre les cils.

Selon un mode de réalisation, le moyeu 45a-e, 45a' des pièces 43, 43' comprend des nervures axiales 47 formées à l'intérieur du moyeu. Les nervures 47 sont prévues pour coopérer avec des rainures de forme complémentaire formées sur la tige 41, 41' de l'applicateur. Ainsi, les pièces 43, 43' peuvent être introduites sur la tige 41, 41' seulement dans une position angulaire déterminée autour de l'axe X de la tige. Cette disposition permet par exemple de répartir des ailettes 44a, 44b, 44a', 44b' d'une manière uniforme autour de la tige 41, 41'.

Selon un mode de réalisation, le moyeu 45a-e, 45a' des pièces 43, 43' comprend des rainures axiales 47 formées sur la face extérieure du moyeu, Ces rainures sont prévues pour recevoir les bords internes des autres pièces 43, 43' lorsque ces dernières sont engagées sur la tige 41, 41' pour former l'applicateur 4, 4'.

Selon un autre exemple de réalisation illustré par les figures 14 et 15, les pièces assemblées formant l'âme de l'applicateur 5 comprennent des pièces 53 en forme d'étoile, sensiblement planes et montées coaxialement sur la tige 51 de l'applicateur. Les pièces 53 comprennent un moyeu 55 et des éléments radiaux 54 s'étendant radialement autour d'un axe Z du moyeu 55. Le moyeu 55 peut être plus épais que les éléments radiaux 54 dans la direction de l'axe Z, pour espacer ces derniers le long de l'axe longitudinal X de l'applicateur 5. Dans l'exemple des figures 12 et 13, l'applicateur 5 comprend environ 50 pièces 53 et chacune des pièces 53 comprend 15 éléments radiaux 54. Les éléments radiaux présentent une section droite de forme rectangulaire.

Selon un mode de réalisation, les éléments d'application sont formés sur tout ou partie des faces des pièces 53. A cet effet, les faces correspondantes des moules permettant de fabriquer les pièces 53 peuvent être traitées à l'aide d'un laser femto-seconde pour former les cavités 94 aux emplacements souhaités. Si nécessaire, un système de miroirs peut être utilisé pour orienter le faisceau laser sur certaines faces du moule, par exemple sur les faces formant l'épaisseur des éléments radiaux 54. Toutes les pièces 53 pouvant être de formes identiques, elles peuvent être fabriquées à l'aide d'un même moule.

Selon un mode de réalisation, le moyeu 55 des pièces 53 comprend des nervures axiales 57 formées à l'intérieur du moyeu. Les nervures 57 sont prévues pour coopérer avec des rainures de forme complémentaire formées sur la tige 51 de l'applicateur 5. Ainsi, les pièces 53 peuvent être introduites sur la tige 51 seulement dans une position angulaire déterminée autour de l'axe X de la tige. Cette disposition permet par exemple d'aligner les extrémités libres des éléments radiaux 54 suivant un axe parallèle à l'axe X de la tige 51, ou de les disposer autrement, par exemple de manière à répartir des ces extrémités le long d'hélices. Il est à noter que les rainures formées sur la tige 51 ne sont pas nécessairement alignées suivant la direction de l'axe X, mais peuvent également suivre une trajectoire hélicoïdale.

Par ailleurs, il peut être également envisagé de mouler l'applicateur ou les différentes pièces formant l'applicateur en injectant le matériau thermoplastique dans le moule, mélangé à un gaz inerte pour obtenir un aspect mousseux.

## Revendications

1. Applicateur d'un produit cosmétique sur la peau ou des poils, comprenant un organe d'application (12, 22, 32) en un matériau élastomère thermoplastique, l'organe d'application comprenant :
une âme (13, 23, 33) s'étendant suivant un axe longitudinal (X), et
des éléments d'application (14, 64, 74) formés à la surface (16) de l'organe d'application, chacun des éléments d'application présentant un sommet (15, 65, 75) ayant une largeur (L1) supérieure à 35 µm et inférieure à 450 µm.

2. Applicateur selon la revendication 1, dans lequel le sommet (65, 75) des éléments d'application (64, 74) présente une longueur (L2) plus grande que leur largeur (L1).

3. Applicateur selon la revendication 1 ou 2, dans lequel le sommet (65, 75) des éléments (64, 74) d'application présente une forme rectangulaire, ou les éléments d'application présentent la forme de nervures parallèles (74).

4. Applicateur selon l'une des revendications 1 et 3, dans lequel les éléments d'application (14, 64, 74) présentent une largeur (L1) comprise entre 40 et 400 µm.

5. Applicateur selon l'une des revendications 1 et 4, dans lequel les éléments d'application (14, 64, 74) présentent une hauteur (H1) comprise entre 350 et 600 µm.

6. Applicateur selon l'une des revendications 1 à 5, dans lequel les éléments d'application (14, 64, 74), sont espacés les uns des autres d'une distance (D1, D2) comprise entre une et deux fois et demi la largeur (L1) du sommet des éléments d'application.

7. Applicateur selon la revendication 6, dans lequel l'âme (23, 33) présente une gorge (26, 36) de forme circulaire ou hélicoïdale.

8. Applicateur selon l'une des revendications 1 à 7, dans lequel l'âme (33) comprend deux parties (37, 38) en forme de goutte disposées suivant l'axe longitudinal (X), les deux parties délimitant entre elles une gorge annulaire (36).

9. Applicateur selon l'une des revendications 1 à 6, dans lequel l'organe d'application (42, 52) comprend une pluralité de pièces (43, 43', 53) engagées sur une tige (41, 41' 51) de l'applicateur, les éléments d'application (14, 64, 74) étant formés à la surface des pièces (43, 43', 53).

10. Applicateur selon la revendication 9, dans lequel chacune des pièces (43, 43') comprend deux parties (44a, 44b) en forme d'ailette liées entre elles par une partie (45a-45e) formant un moyeu dans lequel la tige (41, 41') de l'applicateur est engagée, les parties de forme d'ailette formant des ailettes autour de la tige de l'applicateur.

11. Applicateur selon la revendication 9, dans lequel chacune des pièces (53) présente la forme d'une étoile avec un moyeu (55) dans lequel la tige (51) de l'applicateur est engagée et des éléments radiaux (54) s'étendant radialement autour du moyeu.

12. Procédé de fabrication d'un applicateur cosmétique (1, 2, 3) selon l'une des revendications 1 à 11, le procédé comprenant une étape de moulage d'un matériau élastomère thermoplastique, à l'aide d'un moule (9) de forme complémentaire à celle de l'applicateur (1, 2, 3) ou d'une pièce (43, 43', 53) de l'applicateur (4, 5), le moule présentant une pluralité de cavités (94) de formes complémentaires à celles des éléments d'application (14, 64, 74) de l'applicateur.

13. Procédé de fabrication selon la revendication 12, comprenant une étape de fabrication du moule (9), les cavités (94) étant formées à l'aide d'un laser femto-seconde.

14. Moule pour la fabrication d'un applicateur de produit cosmétique, selon l'une des revendications 1 à 11, le moule comprenant une surface de moulage présentant une pluralité de cavités (94) de formes complémentaires à celles des éléments d'application (14, 64, 74) de l'applicateur.
